# EUROPÄISCHE PATENTSCHRIFT

(11) **EP 2 558 339 B1**
(45) Veröffentlichungstag und Bekanntmachung des Hinweises auf die Patenterteilung: **30.08.2017**
(21) Anmeldenummer: 11714040.0
(22) Anmeldetag: 13.04.2011
(51) Int. Cl.: B60T 17/02, F04C 28/06

(54) **REGELVENTIL FÜR EINEN ÖLEINGESPRITZTEN SCHRAUBENVERDICHTER**
CONTROL VALVE FOR AN OIL-INJECTED SCREW-TYPE COMPRESSOR
SOUPAPE DE RÉGULATION POUR COMPRESSEUR À VIS À INJECTION D'HUILE

(30) Priorität: 16.04.2010 DE 102010015152
(43) Veröffentlichungstag der Anmeldung: 20.02.2013
(73) Patentinhaber: KNORR-BREMSE Systeme für Schienenfahrzeuge GmbH, 80809 München (DE)
(72) Erfinder: KÖCK, Engelbert, 82152 Planegg (DE); HOFSTETTER, Michael, 85410 Haag an der Amper (DE)
(74) Vertreter: Schönmann, Kurt
(86) Internationale Anmeldenummer: PCT/EP2011/055764
(87) Internationale Veröffentlichungsnummer: WO 2011/128354

(56) Entgegenhaltungen:
- EP-A2- 1 024 257
- DE-A1-102007 005 557
- US-A1- 2005 089 432
- US-A1- 2007 194 140

## Beschreibung

Die Erfindung betrifft ein Regelventil für einen öleingespritzten Schraubenverdichter, insbesondere für einen Fahrzeugeinbau, wobei in einem Schraubenverdichtergehäuse befindliches Öl über das Regelventil gesteuert einem Wärmetauscher und/oder einem Bypass in der Form zuführbar ist, dass kaltes Öl durch einen den Wärmetauscher umgehenden Bypass und warmes Öl durch den Wärmetauscher geleitet wird und wobei das Regelventil einen von einem Steuerelement betätigten Steuerkolben aufweist, der mit jeweils einer in einem Regelventilgehäuse angeordneten Wärmetauscheröffnung und Bypassöffnung zusammenwirkt.

Ein derartiges Regelventil ist aus der US 2005/089432 A1 bekannt. Dieses Regelventil weist ein Ventilelement auf, das unter dem Einfluss einer Feder gegen das Ende einer Bohrung gedrückt werden kann, wodurch sowohl ein erster Durchgang als auch ein zweiter Durchgang offen sind. Durch die beiden offenen Durchgänge kann Öl sowohl durch einen Ölkühler als auch durch eine den Ölkühler umgehende Nebenleitung fließen. Diese Möglichkeit des Ölflusses erfolgt unabhängig davon, ob das Öl kalt oder warm ist. Dies ist dadurch möglich, dass der Ölkühler insgesamt vier Zugänge und Abgänge aufweist. Dadurch ist bei dieser Ausgestaltung kein standardmäßiger Ölkühler verbaubar.

Ein weiteres Regelventil in Form eines Ölthermostats ist aus der DE 10 2006 010 723 A1 bekannt. Dieses Regelventil ist separat in einer Antriebsträgerplatte integriert und fluidisch und/oder elektrisch über die Trägerplatte mit zumindest einer der Komponenten der beschriebenen Verdichteranordnung verbunden. Vorteilhaft an dieser Ausgestaltung ist es, dass keine separate Vorrichtung zur Aufnahme des Regelventils notwendig ist, da diese direkt an/in der Trägerplatte befestigt werden kann. Ein besonderer Vorteil ist die Zugänglichkeit des Regelventils von der Außenseite der Vorrichtung, woraus sich eine hohe

Wartungsfreundlichkeit ergibt. Das Regelventil ist so ausgestaltet, dass bei kaltem Öl dieses durch einen dem Wärmetauscher umgebenden Bypass und bei warmem Öl durch den Wärmetauscher leitet. Nähere Details, wie dies konkret geschieht, sind diesem Dokument nicht zu entnehmen.

Der Erfindung liegt die Aufgabe zu Grunde, ein Regelventil für einen öleingespritzten Schraubenverdichter bereitzustellen, welches eine schnelle Erwärmung des Öls des Schraubenverdichters auch bei niedriger Einschaltdauer bei gleichzeitig stabilem Regelverhalten des Ventils sicherstellt.

Diese Aufgabe wird dadurch gelöst, dass der Steuerkolben zumindest eine mit der Wärmetauscheröffnung zusammenwirkende weitere Bypassöffnung beherrscht und dass die weitere Bypassöffnung in dem Steuerkolben angeordnet ist. Die Anordnung in dem Steuerkolben ist die bevorzugte Ausführungsform, da derart die Bypassöffnung einfach beispielsweise in Form einer Bohrung oder einer Ausnehmung in den Steuerkolben eingearbeitet werden kann. Hierbei können auch unterschiedliche Regelcharakteristika berücksichtigt werden.

Dieser Ausgestaltung liegt zunächst einmal die Erkenntnis zu Grunde, dass bei bisherigen Konstruktionen die Umschaltung von dem Bypass zu dem Wärmetauscher zu einem schlagartigen Zufluss gekühlten Öls zu dem Schraubenverdichter geführt hat und dadurch ein ständiges Hin- und Herschalten des Regelventils verursacht wurde. Durch die erfindungsgemäß mit der Wärmetauscheröffnung zusammenwirkende Bypassöffnung wird bewirkt, dass schon vor dem eigentlichen Umschaltvorgang eine bestimmte Menge Öl durch den Wärmetauscher geleitet wird und dadurch einerseits starke Temperaturänderungen vermieden werden und andererseits ein problemloses "Freispülen" des Wärmetauschers bei sehr niedrigen Umgebungstemperaturen erreicht wird. Denn bei sehr kalten Umgebungstemperaturen ist das Öl zähflüssig und die Strömungskanäle durch den Wärmetauscher bewirken einen hohen Strömungswiderstand.

Die weitere Bypassöffnung im Steuerkolben ist also der entscheidende Zusatz, da damit zusätzlich verhindert wird, dass beim Umschalten mittels der Steueröffnung von Bypass auf Kühler auf einen Schlag vorher nicht vorgewärmtes Öl aus dem Kühler auf das Regelelement trifft und dieses damit in die Ausgangsposition zurückschalten würde. Da dann der Kühler wieder abgeklemmt wäre, würde beim Stand der Technik ein Verdichter wieder sehr schnell heiß werden und das Regelventil wiederum würde sofort wieder in die andere Richtung regeln. Ein stabiler Zustand wird damit nicht erreicht, das Regelventil "schwingt" hin und her, wie vorstehend erläutert.

In weiterer Ausgestaltung der Erfindung ist die Bypassöffnung eine Leckageöffnung. Durch diese Leckageöffnung wird ständig eine bestimmte Menge Öl dem Wärmetauscher zugeführt.

In Weiterbildung der Erfindung ist die Bypassöffnung kreisförmig (mit einem kleineren Durchmesser als der Steueraustritt) ausgestaltet. Eine kreisförmig ausgestaltete Bypassöffnung ist besonders einfach herzustellen, wobei auch mehrere kreisförmige öffnungen, die ggf. unterschiedliche Durchmesser aufweisen und unterschiedlich angeordnet sein können in dem Steuerkolben angebracht sein können.

In Weiterbildung der Erfindung ist auch die Steueröffnung kreisförmig (mit einem größeren Durchmesser als der Bypassaustritt) ausgestaltet. Eine kreisförmig ausgestaltete Steueröffnung ist ebenfalls besonders einfach herzustellen, wobei auch mehrere kreisförmige Öffnungen, die gegebenenfalls unterschiedliche Durchmesser aufweisen, nebeneinander oder ineinander übergehend in dem Steuerkolben angeordnet sein können. Dadurch wird erreicht, dass eine kontinuierliche Änderung des Durchflusses durch den Wärmetauscher erreicht wird. Zur Erreichung des gleichen Effekts kann die Steueröffnung auch dreieckig oder trapezförmig ausgestaltet sein beziehungsweise auch beliebige andere Ausgestaltungen mit einer sich ändernden Öffnungsgröße aufweisen.

In weiterer Ausgestaltung der Erfindung ist das Steuerelement ein Dehnstoffelement. Ein Dehnstoffelement ist als Standardbauelement verfügbar und kann somit in das erfindungsgemäße Regelventil eingesetzt werden.

In weiterer Ausgestaltung der Erfindung sind das Steuerventilgehäuse und der Steuerventilkolben aus einem Material mit ähnlichem Wärmedehnverhalten gefertigt. Dadurch wird erreicht, dass aufgrund von ähnlichen Ausdehnungsverhalten bei Temperaturänderungen eine enge Passung ermöglich ist ohne dass die Bewegungsfreiheit des Steuerelements behindert wird. Durch diese Ausgestaltung wird der fertigungsbedingte Leckagestrom zwischen dem Steuerventilkolben und dem Steuerventilgehäuse minimiert. Letzteres ist Voraussetzung für die präzise Steuerung auch kleiner Leckageströme über eine gezielt dimensionierte Bypassöffnung.

Zusammenfassend wird durch das erfindungsgemäß ausgestaltete Regelventil erreicht, dass der Schraubenkompressor auch bei niedriger Einschaltdauer schnell und ohne ein ständiges Hin- und Herschalten zwischen der Bypassöffnung und der Wärmetauscheröffnung auf Betriebstemperatur kommt. Dadurch wird einem Kondensatanfall und den damit verbundenen Folgewirkungen entgegengewirkt. Die bisher z.B. für Schienenfahrzeuge im allgemeinen geltende Mindesteinschaltdauer von 30%, die nötig ist, um Kondensatanfall zu vermeiden beziehungsweise bereits angefallenes Kondensat zum Verdampfen zu bringen, kann so bis unter 15% abgesenkt werden.

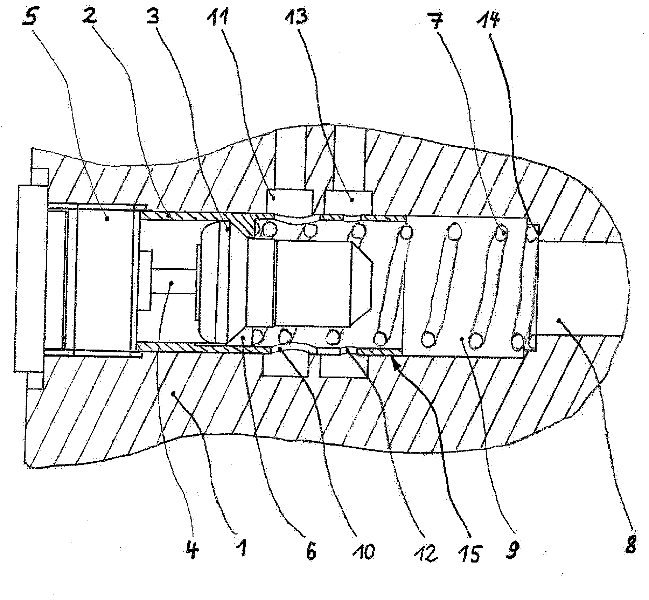

Weitere vorteilhafte Ausgestaltungen der Erfindung sind der Zeichnungsbeschreibung zu entnehmen, in der ein in der einzigen Figur dargestelltes Ausführungsbeispiel näher beschrieben ist.

Das erfindungsgemäße Regelventil weist ein Regelventilgehäuse 1 auf, das an beliebiger Stelle an einem Schraubenverdichter oder einer sonstigen Komponente der mit dem Schraubenverdichter zusammenwirkenden Baueinheit angeordnet ist. Alternativ kann das Regelventilgehäuse 1 auch Teil des Schraubenverdichtergehäuses beziehungsweise als Teil eines von dessen Komponenten ausgeführt sein. Letzteres kann beispielsweise durch einen Anguss am Deckel des Schraubenverdichtergehäuses dargestellt werden. Das Regelventil steuert den Ölfluss durch einen Bypass und einen Wärmetauscher der Baueinheit. Das Öl wird zur Kühlung, Schmierung und zur Abdichtung des Schraubenverdichters durch diesen geleitet, wobei das kalte Öl durch den den Wärmetauscher umgehenden Bypass und das warme Öl durch den Wärmetauscher geleitet wird.

Diese Steuerfunktion übernimmt ein Steuerkolben 2, der in dem Steuerventilgehäuse 1 verschiebbar angeordnet ist. Die Verstellbewegung des Steuerkolbens 2 wird von einem als Dehnstoffelement ausgebildeten Steuerelement 3 bewirkt, das sich mit einem aus dem Steuerelement 3 ausfahrbaren Kolben 4 an einer Verschlussschraube 5, die in die den Steuerkolben 2 aufnehmende Bohrung in das Regelventilgehäuse 1 endseitig eingeschraubt ist, abstützt. Das Steuerelement 3 ist in einen Durchbruch in einer Trägerwand 6 des Steuerkolbens 2 eingesetzt, wobei weiterhin zwischen der Trägerwand 6 und einer gegenüberliegend zu der Verschlussschraube 5 die Bohrung begrenzenden Wand 14 eine Ventilfeder 7 eingespannt ist. Die Ventilfeder 7 drückt den Steuerkolben 2 und damit auch das Steuerelement 3 in Richtung auf die Verschlussschraube 5.

Das Öl wird dem Regelventil durch eine Öffnung 8 in der Wand 14 von dem Ölsumpf des Schraubenverdichters zugeführt und durchströmt den Ventilfederraum 9 des Regelventils und umspült dabei den Dehnstoffbereich des Steuerelements 3, bevor es durch eine Steueröffnung 10 in dem Steuerkolben 2 in eine Bypassöffnung 11 in dem Regelventilgehäuse 1 eintritt. Die Steueröffnung 10 ist mit der Bypassleitung zur Umgehung des Wärmetauschers verbunden. Diese Strömungsverbindung ist bei kaltem Öl geschaltet und wird bei zunehmender Erwärmung des Öls kontinuierlich durch eine Verschiebung des Steuerkolbens 2 nach rechts in Richtung zu der Wand 14 verschlossen.

Zusätzlich weist der Steuerkolben 2 eine Bypassöffnung 12 auf, die mit einer Wärmetauscheröffnung 13 in dem Ventilgehäuse 1 zusammenwirkt. Die Bypassöffnung 12 ist so in Bezug zu dem Steueraustritt 10 in dem Steuerkolben 2 angeordnet, dass schon zu dem Zeitpunkt, zu dem normalerweise noch die gesamte Ölmenge durch die Bypassöffnung 11 geleitet wird, eine Teilmenge des Ölstroms in die Wärmetauscheröffnung 13 eingeleitet wird. Dadurch wird eine Konditionierung des Ölstroms durch den Wärmetauscher erreicht, bevor der Steuerkolben 2 soweit in Richtung zu der Wand 14 verstellt ist, dass die Steueröffnung 10 in dem Steuerkolben 2 mit der Wärmetauscheröffnung 13 zusammenwirkt und der Eintritt in die Bypassöffnung 11 verschlossen ist.

### Bezugszeichenliste

- 1: Regelventilgehäuse
- 2: Steuerkolben
- 3: Steuerelement
- 4: Kolben
- 5: Verschlussschraube
- 6: Trägerwand
- 7: Ventilfeder
- 8: Öffnung
- 9: Ventilfederraum 10 Steueröffnung
- 11: Bypassöffnung
- 12: Bypassöffnung
- 13: Wärmetauscheröffnung
- 14: Wand

## Patentansprüche

1. Regelventil für einen öleingespritzten Schraubenverdichter, insbesondere für einen Fahrzeugeinbau, wobei in einem Schraubenverdichtergehäuse befindliches Öl über das Regelventil gesteuert einem Wärmetauscher und/oder einem Bypass in der Form zuführbar ist, dass kaltes Öl durch einen den Wärmetauscher umgehenden Bypass und warmes Öl durch den Wärmetauscher geleitet wird, und wobei das Regelventil einen von einem Steuerelement (3) betätigten Steuerkolben (2) aufweist, der mit jeweils einer in einem Regelventilgehäuse (1) angeordneten Wärmetauscheröffnung (13) und Bypassöffnung (11) zusammenwirkt,
**dadurch gekennzeichnet, dass** der Steuerkolben (2) zumindest eine mit der Wärmetauscheröffnung (13) zusammenwirkende weitere Bypassöffnung (12) beherrscht und dass die weitere Bypassöffnung (12) in dem Steuerkolben (2) angeordnet ist.

2. Regelventil nach Anspruch 1,
**dadurch gekennzeichnet, dass** die weitere Bypassöffnung (12) eine Leckageöffnung ist.

3. Regelventil nach einem der vorherigen Ansprüche,
**dadurch gekennzeichnet, dass** die weitere Bypassöffnung (12) kreisförmig ausgestaltet ist.

4. Regelventil nach einem der vorherigen Ansprüche,
**dadurch gekennzeichnet, dass** eine Steueröffnung (10) in dem Steuerkolben (2) angeordnet ist.

5. Regelventil nach einem der vorherigen Ansprüche 1 bis 3,
**dadurch gekennzeichnet, dass** eine Steueröffnung (10) in dem Regelventilgehäuse (1) angeordnet ist.

6. Regelventil nach Anspruch 4 oder 5,
**dadurch gekennzeichnet, dass** die Geometrie der Steueröffnung (10) so ausgestaltet ist, dass bei gleichmäßigem Verfahren des Steuerkolbens (2) die Flächenzunahme der freiwerdenden Steueröffnung (10) nicht hierzu linear ist.

7. Regelventil nach Anspruch 4 oder 5,
**dadurch gekennzeichnet, dass** die Steueröffnung (10) kreisförmig ausgestaltet ist.

8. Regelventil nach Anspruch 4 oder 5,
**dadurch gekennzeichnet, dass** die Steueröffnung (10) dreieckig oder trapezförmig ausgestaltet ist.

9. Regelventil nach einem der vorherigen Ansprüche,
**dadurch gekennzeichnet, dass** das Steuerelement (3) ein Dehnstoffelement ist.

10. Regelventil nach einem der vorherigen Ansprüche,
**dadurch gekennzeichnet, dass** das Regelventilgehäuse (1) und der Steuerkolben (2) aus einem Material mit ähnlichem Wärmedehnverhalten gefertigt sind.

11. Regelventil nach einem der vorherigen Ansprüche,
**dadurch gekennzeichnet, dass** ein Spalt (15) zwischen Regelventilgehäuse (1) und dem Steuerkolben (2) so eng ausgeführt ist, dass der hierdurch bedingte Durchfluss geringer ausfällt als der Durchfluss durch die Bypassöffnung (12).

## Claims

1. Control valve for an oil-injected screw-type compressor, in particular for installation in a vehicle, wherein oil located in a screw-type compressor housing can be supplied in a controlled manner via the control valve to a heat exchanger and / or to a bypass in such a way that cold oil is conducted through a bypass around the heat exchanger and warm oil is conducted through the heat exchanger, and wherein the control valve has a control piston (2) actuated by a control element (3), the control piston (2) cooperating with a heat exchanger opening (13) and a bypass opening (11) arranged in a control valve housing (1),
**characterised in that** the control piston (2) controls at least one further bypass opening (12) cooperating with the heat exchanger opening (13), and **in that** the further bypass opening (12) is arranged in the control piston (2).

2. Control valve according to claim 1,
**characterised in that** the further bypass opening (12) is a leakage opening.

3. Control valve according to any one of the preceding claims,
**characterised in that** the further bypass opening (12) is designed in a circular shape.

4. Control valve according to any one of the preceding claims,
**characterised in that** a control opening (10) is arranged in the control piston (2).

5. Control valve according to any one of the preceding claims 1 to 3,
**characterised in that** a control opening (10) is arranged in the control valve housing (1).

6. Control valve according to claim 4 or 5,
**characterised in that** the geometry of the control opening (10) is designed so that, with steady movement of the control piston (2), the increase in area of the exposed control opening (10) is not linear thereto.

7. Control valve according to claim 4 or 5,
**characterised in that** the control opening (10) is designed in a circular shape.

8. Control valve according to claim 4 or 5,
**characterised in that** the control opening (10) is designed to be triangular or trapezoidal.

9. Control valve according to any one of the preceding claims,
**characterised in that** the control element (3) is a thermally expandable element.

10. Control valve according to any one of the preceding claims,
**characterised in that** the control valve housing (1) and the control piston (2) are produced from a material with similar thermal expansion behaviour.

11. Control valve according to any one of the preceding claims,
**characterised in that** a gap (15) between the control valve housing (1) and the control piston (2) is designed to be so narrow that the flow arising is less than the flow through the bypass opening (12).

## Revendications

1. Soupape de régulation pour un compresseur à vis à injection d'huile, notamment pour un montage dans un véhicule, dans laquelle de l'huile se trouvant dans le carter du compresseur à vis peut être envoyée de manière commandée par la soupape de régulation à un échangeur de chaleur et/ou à une dérivation sous la forme que de l'huile froide passe par une dérivation contournant l'échangeur de chaleur et de l'huile tiède passe par l'échangeur de chaleur et dans laquelle la soupape de régulation a un piston (2) de commande actionné par un élément (3) de commande, qui coopère avec respectivement une ouverture (13) disposée dans le boîtier (1) de la soupape de régulation et une ouverture (11) de régulation,
**caractérisée en ce que** le piston (2) de commande maîtrise au moins une autre ouverture (12) de dérivation coopérant avec l'ouverture (13) de l'échangeur de chaleur et **en ce que** l'autre ouverture (12) de dérivation est disposée dans le piston (2) de commande.

2. Soupape de régulation suivant la revendication 1,
**caractérisée en ce que** l'autre ouverture (12) de dérivation est une ouverture de fuite.

3. Soupape de régulation suivant l'une des revendications précédentes,
**caractérisée en ce que** l'autre ouverture (12) de dérivation est circulaire.

4. Soupape de régulation suivant l'une des revendications précédentes,
**caractérisée en ce qu'**une ouverture (10) de commande est disposée dans le piston (2) de commande.

5. Soupape de régulation suivant l'une des revendications 1 à 3,
**caractérisée en ce qu'**une ouverture (10) de commande est disposée dans le boîtier (1) de la soupape de régulation.

6. Soupape de régulation suivant la revendication 4 ou 5,
**caractérisée en ce que** la géométrie de l'ouverture (10) de commande est conformée de manière à ce que, pour un déplacement uniforme du piston (2) de commande, l'augmentation de surface de l'ouverture (10) de commande devenant libre n'est à cet effet pas linéaire.

7. Soupape de régulation suivant la revendication 4 ou 5,
**caractérisée en ce que** l'ouverture (10) de commande est circulaire.

8. Soupape de régulation suivant la revendication 4 ou 5,
**caractérisée en ce que** l'ouverture (10) de commande est triangulaire ou trapézoïdale.

9. Soupape de régulation suivant l'une des revendications précédentes,
**caractérisée en ce que** l'élément (3) de commande est un élément à substance dilatante.

10. Soupape de régulation suivant l'une des revendications précédentes,
**caractérisée en ce que** le boîtier (1) de la soupape de régulation et le piston (2) de commande sont en un matériau ayant un même comportement de dilatation à la chaleur.

11. Soupape de régulation suivant l'une des revendications précédentes,
**caractérisée en ce qu'**une fente (15) entre le boîtier (1) de la soupape de régulation et le piston (2) de commande est si étroite que le débit ainsi provoqué est plus petit que le débit dans l'ouverture (12) de dérivation.
